# EUROPÄISCHE PATENTSCHRIFT

(11) **EP 2 949 461 B1**
(45) Veröffentlichungstag und Bekanntmachung des Hinweises auf die Patenterteilung: **06.04.2016**
(21) Anmeldenummer: 14169903.3
(22) Anmeldetag: 26.05.2014
(51) Int. Cl.: B32B 5/02, B32B 17/06, B32B 27/06, B32B 27/30, B32B 27/32

(54) **Druckträger**
Print substrate
Support d'impression

(43) Veröffentlichungstag der Anmeldung: 02.12.2015
(73) Patentinhaber: Timonisam UG, 40667 Meerbusch (DE)
(72) Erfinder: Michalik, Timo, 40667 Meerbusch (DE)
(74) Vertreter: Stenger Watzke Ring

(56) Entgegenhaltungen:
- US-A1- 2006 035 550
- DATABASE WPI Week 201402 Thomson Scientific, London, GB; AN 2013-Q95576 XP002728322, & CN 103 114 706 A (JIANGSU HUA ER RUN GROUP CO LTD) 22. Mai 2013 (2013-05-22)
- DATABASE WPI Week 201381 Thomson Scientific, London, GB; AN 2013-W21026 XP002728324, & CN 203 174 994 U (JIANGSU HUA ER RUN GROUP CO LTD) 4. September 2013 (2013-09-04)

## Beschreibung

Die Erfindung betrifft einen Druckträger mit einer Kunststofffolie aus einer Polymerzusammensetzung, welche wenigstens teilweise Polyvinylchlorid (PVC) oder Polyolefin (PO) beinhaltet, wobei die Kunststofffolie einseitig eine Druckschicht aus wenigstens einem Farbstoff trägt.

Gattungsgemäße Druckträger sind insbesondere in Form von Aufklebern aus dem Stand der Technik seit langem bekannt, weshalb es einem druckschriftlichen Nachweis an dieser Stelle nicht bedarf. Sie werden vorwiegend zum Bekleben von freien Flächen wie insbesondere auf Wänden, Fussböden, Möbelstücken oder dergleichen verwendet. Sie dienen dabei vorwiegend der Individualisierung der benannten Flächen und dienen insbesondere im öffentlichen Bereich als Werbeträger.

Diese, aus dem Stand der Technik bekannten Aufkleber haben den Nachteil, dass sie auf unebenen Flächen, wie insbesondere Kacheloberflächen, Holzvertäfelungen, Gitterflächen oder dergleichen nur bedingt oder überhaupt nicht einsetzbar sind, da sie die Form der unterliegenden Oberfläche nachbilden und so insbesondere in Kantenbereichen besagter Oberflächen das Druckmotiv in unerwünschter Weise verzerren. Darüber hinaus ist ein solcher Aufkleber in besagten Bereichen aufgrund ungleichmäßiger Krafteinwirkung besonders anfällig gegenüber Abrieb und Verschleiß. Insbesondere bei Fußbodenaufklebern führt dies nach kürzester Zeit dazu, dass diese als Werbefläche unbrauchbar werden.

Des Weiteren besteht bei solchen Aufklebern das technische Problem, dass sie nach ihrer bestimmungsgemäßen Verwendung wieder von der beklebten Oberfläche entfernt werden müssen. Aufgrund der direkten Verbindung zwischen Aufkleber und Untergrund ist das Entfernen mit großem Aufwand verbunden. Darüber hinaus werden die Aufkleber bei der Ablösung vom Untergrund in der Regel zerstört und können nicht weiterverwendet werden, was insbesondere hinsichtlich ökologischer Gesichtspunkte problematisch und angesichts des steigenden Umweltbewusstseins in der Bevölkerung nicht mehr zeitgemäß ist. Zusätzlich dazu wird der Untergrund in Mitleidenschaft gezogen, da zurückbleibende Klebereste mit aggressiven Reinigungsmitteln entfernt werden müssen. Die Lebensdauer des Untergrundes wird hierdurch in unerwünschter Weise verringert. Neben der Lebensdauer werden durch das Aufkleben eines aus dem Stand der Technik bekannten Druckträgers in Form eines Aufklebers darüber hinaus etwaige Oberflächen-, Schallschutz- und/oder Brandschutzeigenschaften des Untergrundes reduziert, was in der Folge sicherheitsrelevante Konsequenzen haben kann.

Ein allgemeiner Schichtaufbau ist zum Beispiel mit der CN 103114706 A gezeigt. Diese beschreibt einen bedruckten Bodenbelag bestehend aus einer Mehrzahl aus Schichten. Der Schichtaufbau gliedert sich in eine Oberflächenschicht, eine Unterschicht und eine Schaumschicht. Die Schaumschicht ist hierbei zwischen Oberflächenschicht und Unterschicht angeordnet. Die Oberflächenschicht besteht hierbei von oben nach unten, aus einer Abriebsschutzschicht, einer Druckschicht und einer PVC-Schicht.

Nachteilig an dieser Ausgestaltung ist insbesondere der hohe Produktionsaufwand, eine vergleichsweise schlechte Qualität des Druckbildes, der thermischen Beständigkeit.

Die Aufgabe der Erfindung ist es daher, ausgehend vom Vorbeschriebenen einen Druckträger bereitzustellen, der die vorbeschriebenen Nachteile von gattungsgemäßen Druckträgern vermeidet.

Zur Lösung dieser Aufgabe schlägt die Erfindung einen gattungsgemäßen Druckträger vor, der sich dadurch auszeichnet, dass die Druckschicht versiegelungsfrei ausgebildet ist, wobei die Druckschicht die benutzerseitige Außenseite des Druckträgers bildet und, dass die Kunststofffolie mit ihrer unbedruckten Seite mit einer Unterlage stoffschlüssig verbunden ist, wobei die Unterlage eine Materialstärke von wenigstens 1,5 mm aufweist und wenigstens teilweise aus einer aufgeschäumten und recyclebaren Polymerzusammensetzung besteht, und wobei die Druckschicht mit 5 - 40 ml/m² des wenigstens einen Farbstoffes auf die Kunststofffolie aufgedruckt ist, wobei der Druckträger insgesamt eine druckschichtseitige Oberflächenrauhigkeit von wenigstens 10 m aufweist.

Erfindungsgemäß werden die Nachteile der aus dem Stand der Technik bekannten Druckträger dadurch gelöst, dass die bedruckte Kunststofffolie nicht mehr auf Fremdoberflächen, wie insbesondere Möbelflächen, Wände und Fußböden aufgeklebt wird, sondern bereits auf einer erfindungsgemäße Unterlage angeordnet ist, wobei die mechanischen und thermischen Vorteile gegenüber herkömmlichen Aufklebern auf aus dem Stand der Technik unbekannten Synergieeffekten zwischen der Druckschicht, der Kunststofffolie und der Unterlage sowie deren technischer Ausgestaltung beruhen.

Der erfindungsgemäße Druckträger besteht hierzu aus einer Kunststofffolie, welche mit einer flexiblen und biegsamen Unterlage stoffschlüssig verbunden ist. Stoffschlüssig im Sinne der Erfindung bezeichnet hierbei insbesondere Kleben, Schweißen oder dergleichen. Vorteilhafterweise wird hierdurch eine innige Verbindung zwischen Kunststofffolie und Unterlage realisiert und eine Ablösung der Komponenten voneinander verhindert. Bei bestimmungsgemäßer Verwendung ist der Druckträger aufgrund seiner flexiblen und biegsamen Komponenten, insbesondere der Unterlage und der Kunststofffolie, in der Lage, Unebenheiten des Untergrunds, insbesondere bei Backsteinwänden, Kachelböden und dergleichen, auszugleichen. Vorteilhafterweise ist die optische Einheitlichkeit des Druckmotives damit unabhängig vom jeweiligen Untergrund stets gewährleistet. Die erfindungsgemäße Unterlage vermag darüber hinaus druckschichtseitige mechanische Belastungen abzufedern und sorgt so trotz etwaiger Unebenheiten des Untergrunds für eine gleichmäßige Kraftaufnahme und reduziert auf diese Weise Abrieb und Verschleiß der Druckschicht. Vorteilhafterweise wird der bestimmungsgemäße Gebrauch des Druckträgers als Werbeträger somit im Gegensatz zu aus dem Stand der Technik bekannten Druckträgern nicht durch den Untergrund und/oder mechanische Einwirkung beeinträchtigt. Erfindungsgemäß weist die Unterlage hierfür eine Materialstärke von wenigstens 1,5 mm auf. Bevorzugt ist eine Materialstärke von 1,5 - 5 mm, weiter bevorzugt 1,6 - 3 mm, noch weiter bevorzugt 1,6 - 2,0 mm und besonders bevorzugt 1,8 mm. Es hat sich gezeigt, dass eine solche Materialstärke einen optimierten Kompromiss zwischen Flexibilität, Gewicht und Kraft- und Wärmeaufnahmekapazität bietet. Die damit erreichbare Flexibilität ermöglicht insbesondere die Lagerung der Unterlage und/oder des Druckträgers als Rollenware, vorzugsweise in den Maßen 4 m x 30 m. Hierdurch wird eine kontinuierliche Bedruckung des Substrates ermöglicht und die Produktion hinsichtlich ihrer Effizienz optimiert.

Der erfindungsgemäße Druckträger ist darüber hinaus wiederverwendbar, da er zur ortsfesten Anordnung nicht mit dem Untergrund verklebt werden muss, sondern durch die geschäumte Ausgestaltung der Unterlage in Verbindung mit ihrer erfindungsgemäßen Zusammensetzung für eine verrutschsichere Anordnung des Druckträgers zumindest auf ebenen und schrägen Oberflächen sorgt. Vorteilhafterweise wird damit eine Zerstörung des Druckträgers und eine Beschädigung des Untergrundes vollständig vermieden. Für die Anordnung des Druckträgers an im Wesentlichen vertikalen Flächen weist der Druckträger vorzugsweise geeignete Haltemittel zur hängenden Anordnung auf. Alternativ, kann der Druckträger wie auch im Stand der Technik mit dem Untergrund verklebt werden, wodurch eine besonders einfache und stabile Verbindung mit der vertikalen Fläche ausgebildet wird. Auch gemäß dieser alternativen Befestigungsmethode erbringt der Druckträger weiterhin die erfindungsgemäßen Vorteile hinsichtlich des Ausgleichs von Unebenheiten des Untergrunds.

Erfindungsgemäß besteht die Unterlage aus einer recyclebaren Polymerzusammensetzung. Vorzugsweise werden hierzu im Wesentlichen ausschließlich recyclebare Komponenten, wie insbesondere, Polyvinylchlorid, Polystyrol, Polyolefine und dergleichen verwendet. Des Weiteren können der recyclebaren Zusammensetzung Additive, Weichmacher, Pigmente, Füllstoffe, insbesondere Faserfüllstoffe, und Stabilisatoren enthalten. Die erfindungsgemäße Unterlage ist daher dem Wiederverwertungszyklus zuführbar und kann ressourcenschonend produziert werden. Besonders bevorzugt besteht die Unterlage aus biologisch abbaubaren Kunststoffen, insbesondere auf Stärke-, Milchsäure, Cellulose- oder Polyhydroxyalkanoatbasis, insbesondere Polyhydroxybuttersäure. Über die verwendeten biologisch abbaubaren Kunststoffe kann vorzugsweise eine Mindestverwendungsdauer eingestellt und anschließend umweltverträglich entsorgt werden. Insbesondere bei Druckmotiven mit zeitlicher begrenzter Gültigkeit, wie insbesondere Werbeaktionen, ist dies hinsichtlich der großen Zahl an anfallenden Abfallstoffen nach der bestimmungsgemäßen Verwendung in hohem Maße vorteilhaft.

Erfindungsgemäß ist die Kunststofffolie aus einer Polymerzusammensetzung gebildet, welche wenigstens teilweise Polyvinylchlorid, Polyolefin oder bevorzugt Polyolefin-Copolymeren beinhaltet. Die Kunststofffolie ist hierdurch mechanisch ausgesprochen stabil, widerstandsfähig gegenüber Abrieb und ebenfalls recyclebar. Darüber hinaus eignet sie sich optimal als Substrat zu Aufnahme der Druckschicht, da zwischen dem erfindungsgemäß Farbstoff und den vorgenannten Materialien eine abriebsbeständige Wechselwirkung besteht. Die Druckschicht ist somit über die Kunststofffolie wenigstens zum Teil vor Abrieb geschützt. Bevorzugterweise weist die Kunststofffolie eine Materialstärke von 0,1 - 0,4 mm, vorzugsweise 0,2 mm, auf. Insbesondere in Kombination mit der Materialstärke der Unterlage ergibt sich ein besonders flexibler, mechanisch stabiler Druckträger, der in einfacher Weise hochqualitativ bedruckt werden kann.

Gemäß einer bevorzugten Ausgestaltung der Erfindung ist die Kunststofffolie zweischichtig aufgebaut und verfügt unterlagenseitig über eine Faserschicht, insbesondere einem Glasfaservlies zur vorteilhaften Erhöhung der Stabilität des Druckträgers. Insbesondere bei einer Verwendung auf Fußböden, bei der große Kräfte auf den Druckträger einwirken ist eine solche Ausgestaltung besonders vorteilhaft. Darüber hinaus erhöht die Faserschicht durch Verringerung des Wärmeausdehnungskoeffizienten des Druckträgers in vorteilhafter Weise die Formsteifigkeit des Druckträgers bei Temperaturschwankungen, was insbesondere bei Anwendungen außerhalb von geschlossenen Räumen von großem Vorteil ist.

Erfindungsgemäß weist der Druckträger eine druckschichtseitige Oberflächenrauhigkeit von wenigstens 10 m, vorzugsweise 10 - 30 m, weiter bevorzugt 13 - 20 m auf. Oberflächenrauhigkeit im Sinne der Erfindung bezeichnet die Distanz zwischen der gemittelten maximalen Höhe und der gemittelten minimalen Höhe der Oberfläche. Vorteilhafterweise weist der Druckträger durch die erfindungsgemäße Oberflächenrauhigkeit vergleichsweise gute Hafteigenschaften auf, welche unter anderem bei der Begehung des Druckträgers insbesondere bei der Verwendung als Bodenbelag, bei der Anordnung von Gegenständen auf dem Druckträger insbesondere bei der Verwendung als Tischauflage oder bei der sensorischen Abtastung des Druckträgers insbesondere bei der Verwendung als Mouse-Pad vorteilhaft ist. Die Oberflächenrauhigkeit sorgt diesbezüglich für eine verbesserte Rutschsicherheit bei der Begehung und/oder der Ablage von Gegenständen auf dem Druckträger. Insbesondere ist damit eine Rutschsicherheit auf trockenen, wassernassen, wasserfeuchten und öligen bzw. fettigen Druckträgern gegeben. Dies ist insbesondere dort von Vorteil, wo die Gefahr einer Oberflächenbenetzung mit Wasser oder anderen Flüssigkeiten, wie insbesondere Öl, besteht. So kann es z.B. in einem Restaurant, im welchen ein erfindungsgemäßer Druckträger als Tischauflage verwendet wird, passieren, dass Getränke verschüttet werden und den Druckträger benetzen. Durch die erfindungsgemäße Oberflächenrauhigkeit ist auch bei einer solchen Benetzung eine vorteilhafte Rutschsicherheit des Druckträgers gegeben, wodurch insbesondere Gläser und dergleichen verrutschsicher auf diesem platziert werden können. Darüber hinaus sorgt die Oberflächenrauhigkeit für eine verbesserte Sensorgenauigkeit bei der Verwendung als Mouse-Pad, welche auf die vergleichsweise große abtastbare Oberfläche des Druckträgers zurückzuführen ist. Vorzugsweise wird die Oberflächenrauhigkeit dadurch realisiert, dass die Kunststofffolie und/oder die Unterlage druckschichtseitig reliefartig ausgebildet sind. Reliefartig im Sinne der Erfindung bedeutet, dass die jeweilige Oberfläche regelmäßig oder unregelmäßig angeordnete Erhöhungen und Vertiefungen aufweist, welche hinsichtlich ihrer Höhendifferenz derart ausgebildet sind, dass der Druckträger auch nach dem Bedrucken der Kunststofffolie mit der Druckschicht noch die vorgenannte Oberflächenrauhigkeit aufweist.

Erfindungsgemäß wird die Druckschicht mit einer Farbstoffmenge von 5 - 40 ml/m², vorzugsweise 10 - 30 ml/m² und weiter bevorzugt 15 - 20 ml/m², aufgedruckt. Es hat sich gezeigt, dass eine solche Farbstoffmenge insbesondere in Verbindung mit der reliefartigen Ausgestaltung der Kunststofffolie zu der angestrebten Oberflächenrauhigkeit führt, ohne dabei die Bildqualität des abgedruckten Motives zu beinträchtigen. Generell sind verschiedene Druckverfahren mit unterschiedlichen Farbstoffarten zur Bedruckung der Kunststofffolie geeignet. Erfindungsgemäß besteht die Druckschicht aus wenigstens einem Farbstoff. Bei insbesondere S/W-Motiven ist die Verwendung eines einzigen Farbstoffes ausreichend, wodurch die Herstellung des Druckträgers vereinfacht ist. Bei insbesondere farbigen Motiven ist es jedoch bevorzugt, die Druckschicht aus einem Farbstoffsystem aus 4 Farbstoffen, insbesondere blau, purpur, gelb und schwarz, auch bekannt als CMYK (Cyan, Magenta, Yellow, Key) - System auszubilden. Vorzugsweise kann das CMYK-System, zur Verbesserung des Druckbildes durch zwei weitere Farben, insbesondere orange und grün ergänzt werden. Bevorzugt ist der wenigstens eine Farbstoff oder das jeweilige Farbstoffsystem aus wenigstens einem UV-härtbaren Farbstoff gebildet, der vorteilhafterweise eine schnelle Aushärtung, eine hervorragende Druckqualität und eine vergleichsweise gute Abriebsbeständigkeit bietet.

Zusätzlich zu den vorgenannten Auswirkungen auf die Oberflächenrauhigkeit ist die Menge des verwendeten Farbstoffes hinsichtlich der thermischen Eigenschaften, insbesondere der Entzündlichkeit, des Druckträgers von höchster Relevanz. Es hat sich gezeigt, dass eine Farbstoffmenge von 5 - 40 ml, vorzugsweise 10 - 30 ml, weiter bevorzugt 15 - 20 ml pro Quadratmeter neben der vorgenannten Vorteile darüber hinaus in Verbindung mit den thermischen Eigenschaften der unteren Schichten für eine verminderte Entzündlichkeit des Druckträgers im Vergleich zum Stand der Technik beiträgt. Vorzugsweis kann der Druckträger somit eine maximale Wärmemenge von wenigstens 270 kJ, weiter bevorzugt wenigstens 480 kJ in der Minute und pro Quadratmeter aufnehmen ohne sich zu entzünden. Dies ist insbesondere dort vorteilhaft, wo der Druckträger übermäßiger thermischer Belastung ausgesetzt ist. Er leistet damit im Gegensatz zu aus dem Stand der Technik bekannten Druckträgern einen positiven Beitrag zum Brandschutz und zur Wärmedämmung und kann dementsprechend in Bereichen verwendet werden, die gattungsgemäßen Druckträgern verwehrt sind. Insbesondere eine maximal aufnehmbare Wärmemenge von 480 kJ pro Quadratmeter und Minute gestattet die Verwendung des Druckträgers in Bereichen mit hoher thermischer Belastung wie insbesondere auf sich bei intensiver Sonneneinstrahlung stark erhitzenden Untergründen, wie insbesondere Asphalt, Metall oder dergleichen.

Gemäß der Erfindung bildet die Druckschicht die benutzerseitige Außenseite des Druckträgers. Auf eine Versiegelung der Druckschicht wird explizit verzichtet, da es sich gezeigt hat, dass eine solche Versiegelung hinsichtlich der Darstellung des Druckbildes, der Recyclefähigkeit, des Produktionsaufwands und mechanischen und thermischen Eigenschaften des erfindungsgemäßen Druckträgers nachteilig ist.

Neben den vorgenannten Vorteilen gestatten die erfindungsgemäßen Einzelkomponenten eine vergleichsweise einfache, kostengünstige und hochgradig individualisierbare Herstellung des erfindungsgemäßen Druckträgers.

So ist es bevorzugterweise vorgesehen, dass die Unterlage und die Kunststofffolie in separaten Verfahren hergestellt und als späteres Substrat nach Art eines Zwischenprodukts ohne Verlust der Materialqualität zwischengelagert werden kann. Die Unterlage und die Kunststofffolie werden bevorzugt stoffschlüssig, insbesondere durch Kleben oder Schweißen, miteinander verbunden. Das daraus entstehende Zwischenprodukt bildet ein Substrat, welches in einfacher Weise gelagert und bedruckt werden kann. Vorzugsweise wird das vorgefertigte Substrat nach Eingang der Kundenbestellung zum erfindungsgemäßen Druckträger ausgebildet, indem es mit dem gewünschten Motiv bedruckt wird. Hierdurch ist es möglich, individuellen Kundenwünschen in einfacher Weise Rechnung zu tragen.

Gemäß einer bevorzugten Ausgestaltung der Erfindung werden die Kunststofffolie. und/oder die Unterlage zur Ausbildung einer druckschichtseitigen Oberflächenrauhigkeit während des Zusammenfügens zum Substrat in Reliefform gebracht. Vorzugsweise wird die Reliefstruktur der Kunststofffolie und/oder der Unterlage mittels Druckprägung mit einer geeigneten Druckform eingebracht und beide gleichzeitig zum Substrat druckverschweißt. Das Substrat kann hierdurch an jede gewünschte Oberflächenrauhigkeit individuell angepasst werden. Darüber hinaus können durch diese Methode, sofern gewünscht, sowohl die Kunststofffolie als auch die Unterlage in einem gemeinsamen Arbeitsschritt in Reliefform gebracht werden, womit die Herstellung des Druckträgers insgesamt vereinfacht wird. Alternativ dazu kann die gewünschte Oberflächenrauhigkeit auch nach dem Zusammenfügen zum Substrat durch mechanischer Anrauhung mittels Abrieb oder dergleichen realisiert werden.

Bevorzugt ist es, das Substrat auf einer Rolle zu lagern und auf die individuellen dimensionalen Erfordernisse hin zurechtzuschneiden. Ein etwaiger Verschnitt kann vorteilhafterweise dadurch minimiert werden, dass große Motive für insbesondere Boden oder Wandgrafiken mosaikartig auf beliebig kleine Druckträger verteilt und zu einem Gesamtmotiv zusammengefügt werden. Sollte dennoch ein gewisser Verschnitt anfallen, so kann eine etwaige daraus resultierende Materialverschwendung durch die vielseitige Nutzbarkeit des Druckträgers minimiert werden. So ist es insbesondere möglich, Verschnitt der bei einer ersten Bestellung von z.B. großflächigen Wandgrafiken, für eine nachfolgende Bestellung von z.B. kleinflächigen Mouse-Pads zu verwenden. Auf diese Weise ist es möglich einen erfindungsgemäßen Druckträger, ohne Materialverschwendung und entsprechend geringen Kosten zu produzieren. Etwaige dennoch auftretende Verschnittreste können, aufgrund ihrer Recyclefähigkeit wieder dem Materialkreislauf zugeführt werden, wodurch eine Umweltbelastung vollends minimiert wird.

Gemäß einer alternativen Ausgestaltung der Erfindung wird das Substrat bedruckt und der resultierende Druckträger anschließend in die gewünschte Form zugeschnitten. Dies ist insbesondere bei großflächigen Motiven von Vorteil, da dieses kontinuierlich gedruckt werden kann, ohne die Substrate tauschen zu müssen, wodurch die Herstellung vorteilhafterweise vereinfacht wird.

Gemäß einer bevorzugten Ausgestaltung der Erfindung können das Substrat oder der Druckträger in jede gewünschte Form zugeschnitten werden, so dass der Druckträger im Resultat hinsichtlich seiner Form individualisierbar ausgebildet ist. Vorzugsweise können Substrat oder Druckträger in rechteckiger, runder oder individuell frei gestalteter Form zugeschnitten werden. Hierdurch ist es möglich, die Wirkung des auf dem Druckträger befindlichen Motives durch eine korrespondierende Formgebung zu verstärken. Hierbei sind Formen jeder Art, insbesondere in Form von stilisierten Tieren, Sportgeräten, Lebensmitteln und dergleichen denkbar.

Gemäß einem bevorzugten Merkmal der Erfindung wird das zusammengefügte und in Reliefform gebrachte Substrat einer Druckvorrichtung zugeführt und mit einer vorgegeben Menge an Farbstoff pro Quadratmeter bedruckt. Vorzugsweise kann hierbei in einfacher Weise ein herkömmliches Druckgerät zur Bedruckung von Kunststofffolien verwendet werden. Die Notwendigkeit eines speziellen Druckgerätes entfällt somit, wodurch die Produktion des Druckträgers insgesamt weiter vereinfacht ist. Das Substrat ist erfindungsgemäß mit jedem gewünschten Motiv in jeder gewünschten Farbkombination bedruckbar. Die sich hieraus ergebenden Möglichkeiten sind vielfältig. Insbesondere sind die abgebildeten Motive in ihrer Flächenerstreckung problemlos skalierbar. Dies wird insbesondere dadurch erreicht, dass eine gewünschte Zahl von Substraten mit Teilen des Gesamtmotives bedruckt und am Verwendungsort zum Gesamtmotiv zusammengesetzt werden. Auf diese Weise lassen sich auch vergleichsweise große Flächen insbesondere zu Werbezwecken einheitlich nutzen. Insbesondere bei der werbewirksamen Ausgestaltung von Böden und Wänden von Messehallen, Einkaufzentren und dergleichen besteht in dieser Hinsicht großer Bedarf. Darüber hinaus können auch vergleichsweise klein bemessene Substrate mit insbesondere Einzelmotiven, wie insbesondere persönlichen Fotos, künstlerischen Motiven und dergleichen, bedruckt werden. Vorteilhafterweise lassen sich auf diese Art insbesondere Mouse-Pads, Tischauflagen, Bodenschutzmatten für insbesondere Schreibtischstühle und Sportgeräte sowie Dartscheiben und Tresenauflagen für Autohäuser, Tankstellen und dergleichen individuell auf den jeweiligen Kundenwunsch abgestimmt herstellen. Durch die freie Skalierbarkeit des Druckträgers kann darüber hinaus ein etwaiger Materialverlust beim Zuschneiden weitgehend minimiert werden.

Sämtliche erfindungsgemäßen und bevorzugten Merkmale sorgen in synergetischer Weise für die Bereitstellung eines Druckträgers, dessen Anwendungsbereich unabhängig vom Untergrund ist, der recyclebar ist und der vergleichsweise vorteilhafte thermische Eigenschaften und vorteilhafte benutzerseitige Oberflächenrauhigkeit besitzt. Solche Druckträger eignen sich insbesondere bei der Verwendung als Tischauflage, Mouse-Pad, Wandbehang, Bodenmatte und dergleichen für Werbezwecke oder auch zum Erstellen großflächiger und individueller Wand- oder Bodenmotive.

Die folgenden Ausführungsbeispiele dienen lediglich der Erläuterung und sind in keiner Weise beschränkend zu verstehen.
Fig.1 zeigt in skizzenhafter, nicht maßstabsgetreuer Schnittdarstellung einen erfindungsgemäßen Druckträger;
Fig. 2 zeigt in schematischer Darstellung eine bevorzugte Verfahrensführung zur Herstellung des erfindungsgemäßen Druckträgers.

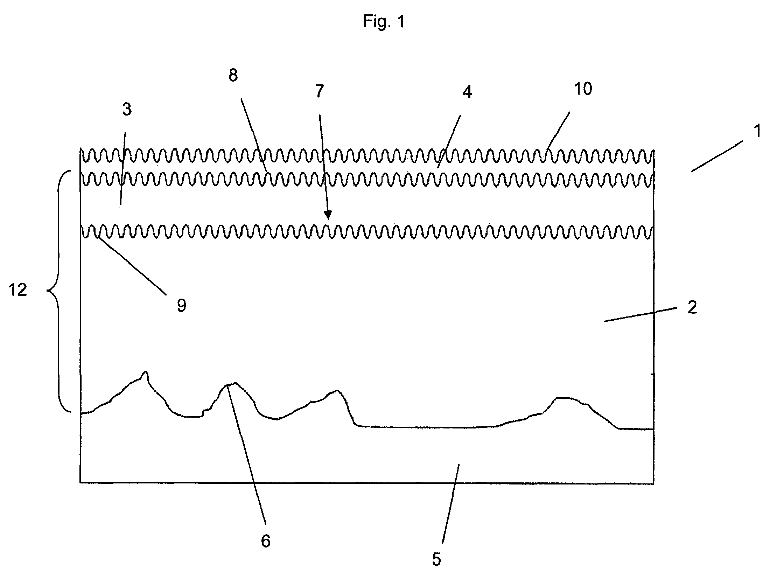

Fig.1 zeigt einen Druckträger 1 mit einer aufgeschäumten, recyclebaren Unterlage 2, einer Kunststofffolie 3 und einer Druckschicht 4. Er ist vorliegend auf einem unebenen Untergrund 5 angeordnet.

Der Druckträger 1 ist hierbei lediglich auf den Untergrund 5 aufgelegt. Eine darüber hinausgehende Verbindung ist nicht vorgesehen. Der Druckträger 1 ist über die Unterlage 2 verrutschsicher auf dem Untergrund 5 angeordnet. Durch die aufgeschäumte, flexible Ausgestaltung der Unterlage 2 werden die Unebenheiten 6 im Untergrund 5 ausgeglichen und die darüber angeordnete dünne Kunststofffolie 3 von besagten Unebenheiten 6 abgeschirmt, welche anderenfalls zu einer Zerstörung der Kunststofffolie 3 und der Druckschicht 4 führen würden. Die Unterlage 2 weist hierzu eine Materialstärke von 1,8 mm auf und besteht wenigstens teilweise aus Polyvinylchlorid.

Die Kunststofffolie 3 ist vorliegend mit ihrer unterlagenseitigen Oberfläche 7 mit der Unterlage 2 verschweißt. Ergänzend kann die Kunststofffolie gemäß einer optionalen Ausgestaltung unterlagenseitig über eine Schicht aus einem Glasfaservlies zur Erhöhung der mechanischen und thermischen Stabilität verfügen. Sie besteht vorliegend ebenfalls wenigstens teilweise aus Polyvinylchlorid und weist eine Materialstärke von 0,2 mm auf.

Sowohl die druckschichtseitige Oberfläche 8 der Kunststofffolie 3 als auch die kunststofffolienseitige Oberfläche 9 der Unterlage 2 sind reliefartig ausgebildet um im Zusammenspiel mit der Farbstoffmenge der Druckschicht eine gewünschte benutzerseitige Oberflächenrauhigkeit von 10 m zu erreichen.

Die Druckschicht 4 ist vorliegend mit 10 ml/m² eines UV-härtbaren Farbstoffes auf die Kunststofffolie 3 aufgedruckt. Hierdurch kann sowohl die gewünschte Oberflächenrauhigkeit erreicht, als auch, in Verbindung mit den mechanischen und chemischen Eigenschaften der Unterlage 2 und der Kunststofffolie 3, eine maximale Wärmemenge von 480 kJ in der Minute aufgenommen werden. Die Druckschicht 4 bildet vorliegend die benutzerseitige Außenseite 10 des Druckträgers 1, welche direkt mit der Umgebung in Kontakt steht.

Der mit diesem Ausführungsbeispiel beschriebene Druckträger ist damit, im Gegensatz zu aus dem Stand der Technik bekannten Druckträgern, für eine Vielzahl von möglichen Anwendungen verwendbar, in denen die Anordnung auf technisch anspruchsvollen Untergründen sowie bestimmte Oberflächeneigenschaften und ein gewisses Maß an thermischer Aufnahmefähigkeit des Druckträgers erforderlich sind.

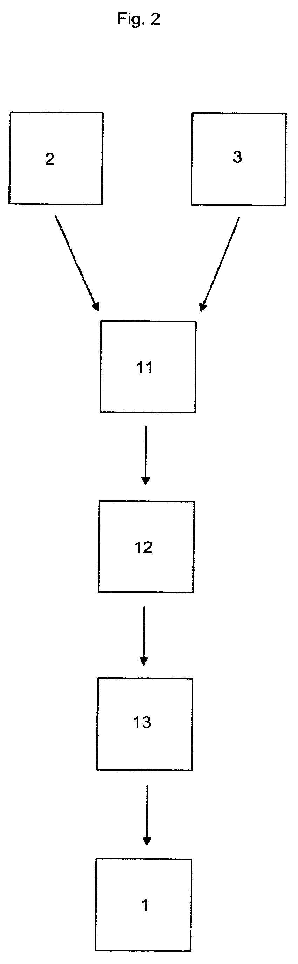

Fig. 2 zeigt exemplarisch die Herstellung eines Druckträgers 1.

Ausgangsprodukte bilden hierbei die auf einer Rolle gelagerte Kunststofffolie 3 und die auf einer Rolle gelagerte Unterlage 2. Die Unterlage 2 und die Kunststofffolie 3 werden in einem ersten Schritt mittels Druck entlang ihrer einander zugewandten Seiten flächig zu einem Substrat 11 verschweißt. Vorteilhafterweise ist diese Verbindung mechanisch besonders stabil, wodurch eine Delamination der Schichten 2, 3 wirkungsvoll unterbunden ist. Darüber hinaus ist der Herstellungsprozess vereinfacht, da insbesondere auf den Einsatz einer zusätzlichen Klebstoffschicht vorteilhafterweise verzichtet werden kann.

Das Substrat 11 wird in demselben Verfahrensschritt mittels Druckprägung mit einer regelmäßigen druckschichtseitigen Reliefstruktur versehen. Infolgedessen weisen sowohl die Kunststofffolie 3 und die Unterlage 2 eine Reliefstruktur auf. Die Höhenunterschiede der Reliefstruktur sind hierbei derart bemessen, dass der Druckträger 1 nach der Bedruckung des Substrats 11 eine druckschichtseitige Oberflächenrauhigkeit von wenigstens 10 m aufweist, wodurch der Druckträger 1 über vorteilhafte HaftEigenschaften verfügt.

Nach der Druckprägung kann das nunmehr reliefartige Substrat 12 vorzugsweise auf einer Rolle zwischengelagert oder direkt mit einer Druckschicht 4 versehen werden. Hierzu wird das reliefartige Substrat 12 einem herkömmlichen Drucker zugeführt und mit UV-härtbarem Farbstoff bedruckt. Der UV-härtbare Farbstoff sorgt vorteilhafterweise für eine schnelle Trocknung, exzellente Druckqualität und eine vergleichsweise hohe Abriebbeständigkeit. Die Menge des verwendeten Farbstoffes ist hierbei derart bemessen, dass eine Oberflächenrauhigkeit von 10 µm und eine maximal aufnehmbare Wärmemenge von 480 kJ pro Minute und Quadratmeter erreicht werden, ohne eine Verminderung der Druckqualität in Kauf zu nehmen, Vorliegend wird der UV-härtbare Farbstoff mit einer Menge von 10 ml/m² auf das reliefartige Substrat 12 aufgedruckt.

Nach der Bedruckung und einer anschließenden Trocknung wird das bedruckte Substrat 13 zur Ausbildung des Druckträgers 1 in die gewünschte Form zugeschnitten, vorliegend rechteckig, zugeschnitten. Der Druckträger ist nun einsetzbar.

## Patentansprüche

1. Druckträger mit einer Kunststofffolie aus einer Polymerzusammensetzung, welche wenigstens teilweise Polyvinylchlorid (PVC) oder Polyolefin (PO) beinhaltet, wobei die Kunststofffolie einseitig eine Druckschicht aus wenigstens einem Farbstoff trägt, **dadurch gekennzeichnet, dass** die Druckschicht versiegelungsfrei ausgebildet ist, wobei die Druckschicht die benutzerseitige Außenseite des Druckträgers bildet und, dass die Kunststofffolie mit ihrer unbedruckten Seite mit einer Unterlage stoffschlüssig verbunden ist, wobei die Unterlage eine Materialstärke von wenigstens 1,5 mm aufweist und wenigstens teilweise aus einer aufgeschäumten und recyclebaren Polymerzusammensetzung besteht, und wobei die Druckschicht mit 5 - 40 ml/m² des wenigstens einen Farbstoffes auf die Kunststofffolie aufgedruckt ist, wobei der Druckträger insgesamt eine druckschichtseitige Oberflächenrauhigkeit von wenigstens 10 µm aufweist.

2. Druckträger nach Anspruch 1, **dadurch gekennzeichnet, dass** die Unterlage eine Materialstärke von 1,6 mm bis 2,0 mm aufweist.

3. Druckträger nach Anspruch 1 oder 2, **dadurch gekennzeichnet, dass** die Kunststofffolie zweischichtig ausgebildet ist, wobei die unterlagenseitige Schicht aus einem Glasfaservlies besteht.

4. Druckträger nach einem der vorhergehenden Ansprüche, **dadurch gekennzeichnet, dass** die Kunststofffolie eine Materialstärke von 0,1 bis 0,4 mm aufweist.

5. Druckträger nach einem der vorhergehenden Ansprüche, **dadurch gekennzeichnet, dass** die Druckschicht mit 10 - 15 ml/m² des UV-härtbaren Farbstoffes auf die Kunststofffolie aufgedruckt ist

6. Druckträger nach einem der vorhergehenden Ansprüche, **gekennzeichnet durch** eine druckschichtseitige Oberflächenrauhigkeit von 10 bis 30 µm.

7. Druckträger nach einem der vorhergehenden Ansprüche, **gekennzeichnet durch** die Aufnahme einer maximalen Wärmemenge von wenigstens 270 kJ/m² in der Minute.

8. Druckträger nach einem der vorhergehenden Ansprüche, **gekennzeichnet, durch** die Aufnahme einer maximalen Wärmemenge von wenigstens 480 kJ/m² in der Minute.

9. Verwendung eines Druckträgers nach einem der Ansprüche 1-8 als Boden- und/oder Wandbelag.

10. Verwendung eines Druckträgers nach einem der Ansprüche 1-8 als Tischauflage.

## Claims

1. A print substrate comprising a plastic foil consisting of a polymer composition which at least partially contains polyvinyl chloride (PVC) or polyolefin (PO), wherein the plastic foil carries a print layer consisting of at least one dye on one side, **characterized in that** the print layer is seal-free, wherein the print layer forms the outer side of the print substrate with respect to the user, and that the unprinted side of the plastic foil is firmly bonded to an underlay, wherein the underlay comprises a material thickness of at least 1.5 mm and consists at least partially of a foamed and recyclable polymer composition, and wherein the print layer is printed onto the plastic foil with 5 - 40 ml/m² of the at least one dye, wherein the print substrate altogether comprises a surface roughness of at least 10 µm on the side of the print layer.

2. A print substrate according to claim 1, **characterized in that** the underlay comprises a material thickness comprised between 1.6 mm and 2.0 mm.

3. A print substrate according to claim 1 or 2, **characterized in that** the plastic foil is composed of two layers, wherein the layer on the side of the underlay consists of a glass fiber fleece.

4. A print substrate according to one of the preceding claims, **characterized in that** the plastic foil comprises a material thickness comprised between 0.1 and 0.4 mm.

5. A print substrate according to one of the preceding claims, **characterized in that** the print layer is printed onto the plastic foil with 10 - 15 ml/m² of the UV-curable dye.

6. A print substrate according to one of the preceding claims, **characterized by** a surface roughness comprised between 10 and 30 µm on the side of the print layer.

7. A print substrate according to one of the preceding claims, **characterized by** taking up a maximum amount of heat of at least 270 kJ/m² within one minute.

8. A print substrate according to one of the preceding claims, **characterized by** taking up a maximum amount of heat of at least 480 kJ/m² within one minute.

9. A utilization of a print substrate according to one of the claims 1-8 as floor and/or wall covering.

10. A utilization of a print substrate according to one of the claims 1-8 as table covering.

## Revendications

1. Support d'impression comprenant un film plastique consistant en une composition polymère, qui contient au moins partiellement la polychlorure de vinyle (PVC) ou la polyoléfine (PO), une face du film plastique portant une couche d'impression consistant en au moins un colorant, **caractérisé en ce que** la couche d'impression ne comprend pas de scellage, la couche d'impression formant la face extérieure du support d'impression par rapport à l'utilisateur, et la face non imprimée du film plastique étant reliée par adhérence de matière à un support de base, lequel support de base comprend une épaisseur de matière d'au moins 1,5 mm et consiste au moins partiellement en une composition de polymère moussée et recyclable, la couche d'impression étant imprimée sur le film plastique avec 5 - 40 ml/m² de l'au moins un colorant, le support d'impression comprenant dans l'ensemble une rugosité de surface d'au moins 10 µm du côté de la couche d'impression.

2. Support d'impression selon la revendication 1, **caractérisé en ce que** le support de base comprend une épaisseur de matière comprise entre 1,6 mm et 2,0 mm.

3. Support d'impression selon la revendication 1 ou la revendication 2, **caractérisé en ce que** le film plastique est composé de deux couches, la couche du côté du support de base consistant en un non tissé en fibres de verre.

4. Support d'impression selon l'une des revendications précédentes, **caractérisé en ce que** le film plastique comprend une épaisseur de matière comprise entre 0,1 et 0,4 mm.

5. Support d'impression selon l'une des revendications précédentes, **caractérisé en ce que** la couche d'impression est imprimée sur le film plastique avec 10-15 ml/m² du colorant durcissable par les rayons ultraviolets.

6. Support d'impression selon l'une des revendications précédentes, **caractérisé par** une rugosité de surface comprise entre 10 et 30 µm du côté de la couche d'impression.

7. Support d'impression selon l'une des revendications précédentes, **caractérisé par** l'absorption d'une quantité de chaleur maximale d'au moins 270 kJ/m² par minute.

8. Support d'impression selon l'une des revendications précédentes, **caractérisé par** l'absorption d'une quantité de chaleur maximale d'au moins 480 kJ/m² par minute.

9. Utilisation d'un support d'impression selon l'une des revendications 1-8 en tant que revêtement de sol et/ou de mur.

10. Utilisation d'un support d'impression selon l'une des revendications 1-8 en tant que couverture de table.
